Europäisches Patentamt

European Patent Office

Office européen des brevets

(11) Veröffentlichungsnummer : **0 455 838 B1**

## (12) EUROPÄISCHE PATENTSCHRIFT

(45) Veröffentlichungstag der Patentschrift :
08.07.92 Patentblatt 92/28

(21) Anmeldenummer : 90105159.9

(22) Anmeldetag : 19.03.90

(51) Int. Cl.⁵ : **G01D 5/16,** H01C 10/08,
F41G 3/22

(54) **Schnelleinweisvorrichtung an einem Beobachtungs- und/oder Geschützfahrzeug.**

(30) Priorität : **09.02.90 CH 424/90**

(43) Veröffentlichungstag der Anmeldung :
**13.11.91 Patentblatt 91/46**

(45) Bekanntmachung des Hinweises auf die
Patenterteilung :
**08.07.92 Patentblatt 92/28**

(84) Benannte Vertragsstaaten :
**AT BE CH DE ES FR GB IT LI NL SE**

(56) Entgegenhaltungen :
**EP-A- 0 191 555**
**EP-A- 0 229 601**
**EP-A- 0 260 365**
**WO-A-87/04848**
**DE-A- 2 216 734**
**US-A- 3 245 017**
**ELEKTRONIK. vol. 35, no. 14, 07 1986, MUN-**
**CHEN DE Seiten 92 - 96; G.Berthold:**
**"Potentiometrische Sensoren als Weggeber**
**undStellungsmelder"**

(73) Patentinhaber : **Oerlikon-Contraves AG**
**Schaffhauserstrasse 580**
**CH-8052 Zürich (CH)**

(72) Erfinder : **Gernet, Pierre**
**Rebbergstrasse 13**
**CH-5400 Ennetbaden (CH)**
Erfinder : **Steinemann, Werner**
**Ifangstrasse 71**
**CH-8153 Rümlang (CH)**
Erfinder : **Margot, Paul-André**
**Wallisellenstrasse 465**
**CH-8050 Zürich (CH)**

(74) Vertreter : **Hunziker, Kurt**
**c/o Oerlikon-Contraves AG Patentabteilung**
**Schaffhauserstrasse 580**
**CH-8052 Zürich (CH)**

EP 0 455 838 B1

## Beschreibung

Die Erfindung betrifft eine Schnelleinweisungsvorrichtung an einem Beobachtungs- oder Geschützfahrzeug, mit als Winkelgeber dienenden elektrischen Schaltungsmitteln.

Bei Fahrzeugen der genannten Art (z.B. Kampfpanzern) wird das Gelände aus dem Innern des Fahrzeugs ständig visuell beobachtet, entweder direkt aus der offenen Luke oder über fest eingebaute Winkelspiegel. Wird ein mögliches Ziel entdeckt, so muss dieses zur genaueren Beurteilung durch ein drehbar montiertes Periskop erfasst werden, dessen Gesichtsfeld stark eingeschränkt ist. Hierfür ist es notwendig, das Periskop (und gegebenenfalls das Geschützrohr) möglichst rasch in die Richtung des Zieles einzuweisen, d.h. der Beobachter muss die Richtung, welche er visuell erfasst hat, auf das Periskop übertragen, damit er bei anschliessender Sicht durch dieses sich rasch im Gelände zurechtfindet. Allgemein üblich ist das Einweisen durch Betätigen eines Richtgriffs oder Steuerknüppels zum servogetriebenen Drehen des Periskops oder Turms, wobei die Richtung im Innern des Fahrzeugs an einer Skala angezeigt wird. Der Beobachter muss also in der Regel seine Körperhaltung ändern und die Richtung auf die Skala umsetzen, wodurch das Wiederauffinden der Richtung erschwert wird und wertvolle Zeit verloren geht. Es ist deshalb versucht worden, die Richtung ungefähr mit einer Anzahl am Lukenumfang verteilt angeordneten, elektrischen Steuertasten zu erfassen und das Periskop bzw. den Turm durch einen Stellantrieb in diese ungefähre Winkelstellung zu drehen. Eine solche Vorrichtung ist jedoch mit z.B. 4 oder 8 Tasten zu ungenau, oder es wäre mit einer Vielzahl von Tasten ein unverhältnismässig grosser Montage-, Verdrahtungs- und Steuerungsaufwand verbunden.

Die Aufgabe der Erfindung besteht deshalb darin, eine Schnelleinweisungsvorrichtung für eine servogetriebene Richtvorrichtung an einem Beotachtungs- oder Geschütfazhrzeug zu schaffen, die bei geringem Aufwand das schnelle Einschwenken auf die beobachtete Richtung mit guter Auflösung und Genauigkeit gewährleistet.

Diese Aufgabe wird erfindungsgemäss gelöst durch ein ringförmig um den Beobachterplatz herum am einem Auskleidungsprofil desselben am Fahrzeug angebrachtes Tastpotentiometer mit einer gebogenen, schlauchartigen Isolierhülle, in welcher eine flexible Widerstandsbahn und eine flexible Kontaktbahn im radialen Abstand zueinander längsverschieblich verlegt sind. Eine solche Vorrichtung lässt sich kostengünstig herstellen und im Fahrzeug montieren, ist robust und dient als stetiger (analoger) Winkelgeber für den Stellantrieb. Indem der Beobachter das Tastpotentiometer in der erfassten Richtung kurz antippt, bringt er die Widerstandsbahn und die Kontaktbahn örtlich miteinander in Kontakt und erzeugt so direkt einen winkelabhängigen Widerstandswert.

Sogenannte Tastpotentiometer sind an sich bekannt, jedoch in gerader, stabförmiger Ausführung z.B. als Weggeber oder als Widerstandsgeber bei elektronischen Musikinstrumenten (EP-A 0 260 365, EP-A 0 284 787, DE-A 36 04 707).

Die Verwendung eine Tastpotentiometers zur Winkelangabe ist aus der EP-A-0229601 bekannt, welche eine Vorrichtung in Form eines ringförmigen, metallischen Rahmens und eines davon beabstandeten, elektrisch leitenden Bandes erwähnt, die beide an der Aussenseite eines Trägers in nicht näher spezifizierter Weise von diesem isoliert befestigt sind, zum Beispiel in der Art eines Puffers am Umfang eines mobilen Roboters. Beim Anstossen des Bandes lässt sich feststellen, wo an der Aussenseite ein Kontakt hergestellt wird.

Besondere, als vorteilhaft erachtete Ausführungsformen des Erfindungsgegenstandes sind in den Patentansprüchen 2 bis 15 angegeben. Nachstehend werden verschiedene Ausführungsbeispiele der erfindungsgemässen Schnelleinweisungsvorrichtung in Verbindung mit der Zeichnung näher beschrieben.

Fig. 1 zeigt die Anordnung eines Tastpotentiometers im Randbereich einer Fahrzeugluke, welcher Randbereich im Radialschnitt und anschliessend in Ansicht dargestellt ist,

Fig. 2 zeigt einen Querschnitt durch eine Ausführungsform des Tastpotentiometer in grösserem Massstab,

Fig. 3 zeigt die Enden eines (ausgestreckt gedachten) Tastpotentiometers nach Fig. 2 im Längsschnitt entlang der Linie III-III in Fig. 2, und

Fig. 4 ist ein Querschnitt durch eine weitere Ausführungsform des Tastpotentiometers analog zur Fig. 2.

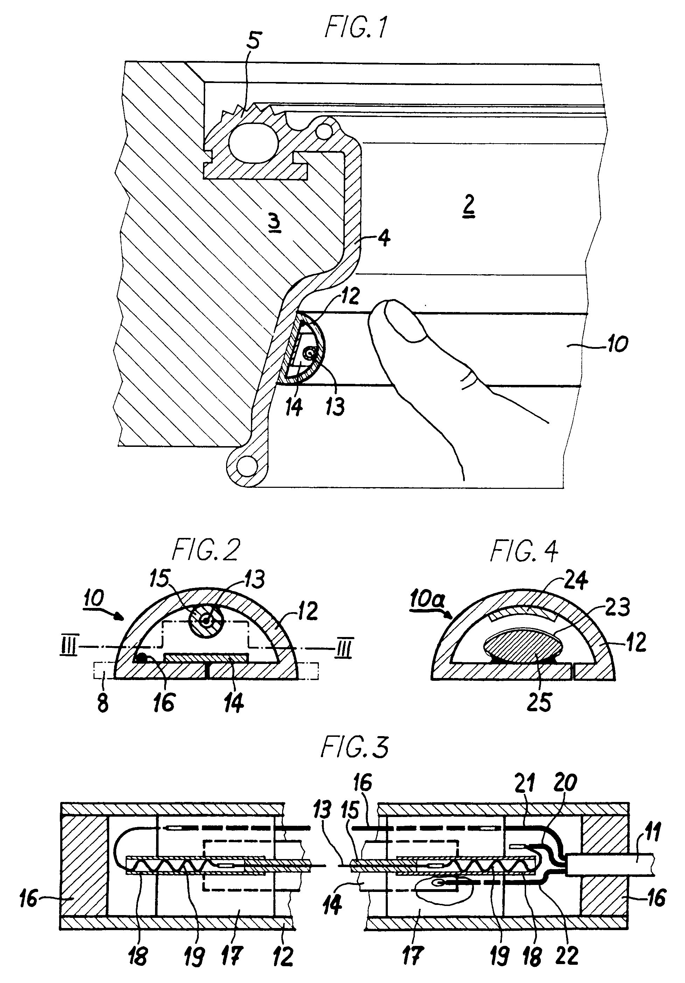

Gemäss Fig. 1 ist die Beobachtungsluke 2 an ihrem Rand 3 in bekannter Weise ringsum mit einem Auskleidungsprofil 4, z.B. aus Gummi, versehen; am Profil 4 kann auch eine Ringdichtung 5 für den Lukendeckel (nicht dargestellt) angeformt sein. Entlang dem Lukenrand 3, also ringförmig um den Beobachterplatz herum, ist ein generell mit 10 bezeichnetes Tastpotentiometer angeordnet. Dieses weist eine gebogene, schlauchartige Isolierhülle 12 auf, in welcher eine flexible Widerstandsbahn 13 und eine flexible Kontaktbahn 14 im radialen Abstand längsverschieblich zueinander verlegt sind. Die Isolierhülle 12 ist zweckmässigerweise, wie dargestellt, durch ein Halbrund-Hohlprofil gebildet. Die Basisfläche der Hülle 12 kann z.B., wie aus Fig. 1 ersichtlich, mit dem Auskleidungsprofil 4 verklebt sein, oder es könnten, wie in Fig. 2 strichpunktiert angedeutet, seitliche Stege 8 angeformt sein, die in eine am Profil 4 vorgesehene T-Nut (nicht dargestellt) eingreifen würden. Es kann aber auch direkt in die Lukenausfütterung integriert, d.h. Teil derselben sein. Es ist zweckmässig, das Tastpotentiometer 10 in einem Einsprung oder einer Nut im Bereich des Lukenrandes 3 zu verlegen, womit es gegen unbeabsichtigte Betätigung und grobe Stösse geschützt ist. Ein verstärkter Schutz gegen Fehlbetätigung lässt sich erreichen durch ein Einbetten des Tastpotentiometers zwischen zwei parallel dazu verlaufende Wülste am Profil 4. Selbstverständlich muss das Tastpotentiometer nicht unbedingt auf einem genauen Kreisbogen verlaufen, vielmehr können auch etwa vorhandene radiale Vorsprünge oder Einschnitte am Lukenrand überbrückt werden, oder der Lukenrand selbst kann z.B. elliptisch sein.

Das Tastpotentiometer 10 ist an eine Servosteuerung für den Drehantrieb des Periskops angeschlossen (nicht dargestellt). Der Beobachter befindet sich im Zentrum des ringförmig angeordneten Tastpotentiometers. Wenn er in einer anvisierten Richtung (ausgehend vom virtuellen Zentrum der Luke) das Potentiometer antastet, so wird an diesem ein elektrisches Potential abgegriffen, welches direkt ein Mass für die Richtung darstellt, in welche das Periskop geschwenkt werden muss; dieser Wert kann in der Steuerung als Sollwert gespeichert werden. Weicht die Lukenform von einem Kreisbogen ab, so wird die abgegriffene Spannung in geeigneter Weise in einen entsprechenden Winkel umgesetzt. Auch eine Nachführung des Periskops entsprechend der Fahrzeug-Bewegung ist mit an sich bekannten Schaltungen ohne weiteres möglich. Dank einer solchen Anordnung eines Tastpotentiometers als Positions- bzw. Winkelgeber erfolgt die Erfassung der Sollposition und die Einweisung sehr rasch, mit hoher Auflösung und mit ausreichender Genauigkeit.

Durch Verwendung von flexiblen bzw. elastischen Materialien sowohl für die Isolierhülle 12 wie auch für die Widerstandsbahn und die Kontaktbahn ist es möglich, das Tastpotentiometer in gestreckter Form in der erforderlichen Länge herzustellen und anschliessend bei der Montage ringförmig zu biegen. Dabei wird auch berücksichtigt, dass zwischen Kontaktbahn und Widerstandsbahn eine Längendifferenz entsteht, da beim gebogenen Tastpotentiometer die beiden Bahnen auf unterschiedlichen Radien liegen. Eine geeignete, beispielsweise Ausgestaltung geht aus den Fig. 2 und 3 hervor. Es wird ein Widerstandsdraht 13 verwendet, welcher eine gute Linearität des Widerstandes über die Länge gewährleistet. Der Widerstandsdraht 13 ist in einem Schlauch 15 aus elektrisch leitfähigem Elastomer längsbeweglich geführt. Der Schlauch 15 ist nicht in Längsrichtung in den Potentiometer-Stromkreis geschaltet, sondern dient lediglich als "Kontaktbrücke", wenn der Draht 13 gegen die Kontaktbahn 14 gedrückt wird. Als Kontaktbahn 14 kann ein Flachprofil aus Metall, z.B. ein Streifen aus Edelstahl oder aus metallisch beschichtetem Kunststoff, verwendet werden, welcher sich leicht zu einer Zylinderfläche biegen lässt. Soll dagegen die "Basis" der Isolierhülle 12 gemäss Fig. 1 auf eine konische Fläche zu liegen kommen, so ist es zweckmässig, für die Kontaktbahn ein Flachprofil aus elektrisch gut leitendem Elastomer zu verwenden.

Die Isolierhülle 12 kann auch aus zwei Schichten mit einer Zwischenlage in Form eines metallischen Geflechts bestehen, welch letzteres - in geeigneter Weise mit den übrigen Anlageteilen verbunden - eine Abschirmung gegen elektromagnetische Felder bildet.

Die zweckmässige Gestaltung der Endbereiche des Tastpotentiometers 10 geht aus Fig. 3 hervor, die einen Schnitt durch die Enden des Tastpotentiometers entlang der Schnittlinie III-III in Fig. 2 zeigt. Die beiden Enden der Isolierhülle 12 sind je mit einem Stopfen 16 verschlossen. Die zur Steuerschaltung führenden Anschlussleitungen des Tastpotentiometers sind vorzugsweise alle im Bereich des einen Endes des Tastpotentiometers aus der Isolierhülle 12 herausgeführt (Kabel 11 rechts in Fig. 3). Von den Endstopfen 16 einwärts befindet sich je eine Isolierlage 17 zwischen dem Endstück der Kontaktbahn 14 und dem Endstück des Schlauches 15 in Form eines Rohrstückes 18. Jedes Rohrstück 18 fasst ein Ende des Schlauches 15, wobei die Enden des etwas längeren Widerstandsdrahtes 13 je mit einem flexiblen Litzenleiter 19 verbunden sind. Der Litzenleiter rechts in Fig. 3 ist mit einer Ader 20 des Kabels 11 direkt verbunden, während der Litzenleiter links über eine in der Hülle 12 verlegte Rückleitung 16 an eine Kabelader 21 angeschlossen ist. Eine dritte Ader 22 des Kabels 11 ist an das eine, benachbarte Ende der Kontaktbahn 14 angeschlossen. Beide Enden der Kontaktbahn 14 sind je unter einer der Isolierlagen 17 festgehalten. Dank der dargestellten Anordnung erfolgt beim Biegen des Tastpotentiometers der erwähnte Längenausgleich dadurch, dass die Enden des längsbeweglichen Drahtes 13 stärker in Richtung der Rohrstücke 18 aus dem Schlauch 15 austreten, während letzterer in Längsrichtung leicht gestaucht wird.

Es ist gegenüber der beschriebenen Anordnung nach Fig. 2 und 3 auch eine Umkehrung in dem Sinne denkbar, dass sich an der Stelle des Widerstandsdrahtes 13 die Kontaktbahn, z.B. in Form eines gut leitenden Drahtes oder einer Litze befindet, während die vorerwähnte Lage der Kontaktbahn 14 dann von der Widerstandsbahn eingenommen wird. Eine Widerstandsbahn in Form eines Flachprofils kann beispielsweise als Schichtwiderstand auf einem Tragprofil aus flexiblem Isoliermaterial ausgebildet sein.

Eine weitere Variante eines Tastpotentiometers 10a (bei welcher ebenfalls die Kontaktbahn sich auf dem kleineren und die Widerstandsbahn auf dem grösseren Radius befindet) ist in Fig. 4 dargestellt. Als Kontaktbahn 24 kann ein flexibles Metallgeflecht oder ein flaches Profil aus elektrisch leitendem Elastomer an der Innenwölbung der Isolierhülle 12 angebracht sein. Die Widerstandsbahn ist durch einen Widerstandsdraht 23 gebildet, welcher in engen Windungen auf ein Tragprofil 25 aus flexiblem Isoliermaterial gewickelt ist. Eine solche Gestaltung weist ebenfalls die erforderliche Flexibilität auf, und es ist auch das Anbringen der Basisfläche der Isolierhülle 12 auf einer kegeligen Montagefläche möglich.

**Patentansprüche**

1. Schnelleinweisungsvorrichtung für eine servogetriebene Richtvorrichtung an einem Beobachtungs- oder Geschützfahrzeug, mit einem als Winkelgeber dienenden, ringförmig um den Beobachterplatz herum am Fahrzeug angebrachten Tastpotentiometer (10, 10a), dadurch gekennzeichnet, dass das Tastpotentiometer (10, 10a) eine flexible Widerstandsbahn (13, 23) und eine flexible Kontaktbahn (14, 24) enthält, die in einer schlauchähnlichen Isolierhülle (12) in radialem Abstand voneinander längsverschieblich geführt sind, wodurch das Tastpotentiometer (10, 10a) verschiedenen Biegeradien anpassbar ist, und dass es an einem Auskleidungsprofil (4) des Beobachterplatzes angebracht und von diesem in seiner Ringform bestimmt ist.

2. Vorrichtung nach Anspruch 1, dadurch gekennzeichnet, dass das Tastpotentiometer (10, 10a) in das Auskleidungsprofil (4) des Lukenrandes (3) der Beobachtungsluke (2) des Fahrzeugs integriert ist.

3. Vorrichtung nach Anspruch 1, dadurch gekennzeichnet, dass das Tastpotentiometer (10, 10a) formschlüssig über Stege (8) und Nuten mit dem Auskleidungsprofil (4) verbunden ist.

4. Vorrichtung nach Anspruch 1, dadurch gekennzeichnet, dass das Auskleidungsprofil (4) beidseitig parallel zum Tastpotentiometer (10, 10a) Wülste von mindestens gleicher Höhe wie die Isolierhülle (12) aufweist.

5. Vorrichtung nach Anspruch 1, dadurch gekennzeichnet, dass die Kontaktbahn (14, 24) und beide Enden der Widerstandsbahn (13, 23) je mit Anschlussleitungen (11, 20, 21, 22) verbunden sind, die im Bereich des einen Endes des Potentiometers (10, 10a) aus der Isolierhülle (12) herausgeführt sind.

6. Vorrichtung nach Anspruch 1, dadurch gekennzeichnet, dass die Widerstandsbahn (13, 23) durch einen Widerstandsdraht gebildet ist.

7. Vorrichtung nach Anspruch 6, dadurch gekennzeichnet, dass der Widerstandsdraht (13) in einem Schlauch (15) aus elektrisch leitfähigem Elastomer längsbeweglich geführt ist.

8. Vorrichtung nach Anspruch 7, dadurch gekennzeichnet, dass die Enden des Widerstandsdrahtes (13) über flexible Litzenleiter (19) innerhalb der Isolierhülle (12) mit Anschlussleitungen (11, 21, 22) verbunden sind.

9. Vorrichtung nach Anspruch, dadurch gekennzeichnet, dass die Widerstandsbahn (13, 23) durch ein Flachprofil aus elektrisch leitendem Elastomer gebildet ist.

10. Vorrichtung nach Anspruch 1, dadurch gekennzeichnet, dass die Widerstandsbahn (13, 23) als Schichtwiderstand auf einem Tragprofil aus flexiblem Isoliermaterial ausgebildet ist.

11. Vorrichtung nach Anspruch 1, dadurch gekennzeichnet, dass die Widerstandsbahn durch eine Wendel aus Widerstandsdraht (23) auf einem Tragprofil (25) aus flexiblem Isoliermaterial gebildet ist.

12. Vorrichtung nach Anspruch 1, dadurch gekennzeichnet, dass die Kontaktbahn (14) als metallisches Flachprofil ausgebildet ist.

13. Vorrichtung nach Anspruch 1, dadurch gekennzeichnet, dass die Kontaktbahn (24) durch ein Flachprofil aus elektrisch leitendem Elastomer gebildet ist.

14. Vorrichtung nach Anspruch 1, dadurch gekennzeichnet, dass die schlauchartige Isolierhülle (12) durch ein Halbrund-Hohlprofil gebildet ist.

15. Vorrichtung nach Anspruch 1, dadurch gekennzeichnet, dass die schlauchartige Isolierhülle (12) ein Abschirmgeflecht enthält.

**Claims**

1. A high-speed orienting device for a servo-driven aiming device on an observation or armoured vehicle, with a touch potentiometer (10,10a), serving as an angle sensor and attached to the vehicle annularly around the observation station, characterised in that the touch potentiometer (10,10a) contains a flexible resistance path (13,23) and a flexible contact path (14, 24), which are guided in a tube-like insulating cover (12), radially spaced from each other and in a longitudinally displaceable manner, whereby the touch potentiometer (10,10a) is able to be adapted to different bending radii, and in that the touch potentiometer is attached to a lining profile (4) of the observation station and determined by this in its annular shape.

2. A device according to claim 1, characterised in that the touch potentiometer (10,10a) is integrated into the lining profile (4) of the hatch edge (3) of the observation hatch (2) of the vehicle.

3. A device according to claim 1, characterised in that the touch potentiometer (10,10a) is connected in a form-locking manner by way of flanges (8) and grooves to the lining profile (4).

4. A device according to claim 1, characterised in that the lining profile (4) has on both sides parallel to the touch potentiometer (10,10a) beads of at least the same height as the insulating cover (12).

5. A device according to claim 1, characterised in that the contact path (14,24) and both ends of the resistance path (13,23) are connected in each case with connecting leads (11,20,21,22) which are led out of the insulating cover (12) in the region of one end of the potentiometer (10,10a).

6. A device according to claim 1, characterised in that the resistance path (13,23) is formed by a resistance wire.

7. A device according to claim 6, characterised in that the resistance wire (13) is guided in a longitudinally mobile manner in a tube (15) of an electrically conductive elastomer.

8. A device according to claim 7, characterised in that the ends of the resistance wire (13) are connected, by way of flexible cable conductors (19) inside the insulating cover (12), to connecting leads (11,21,22).

9. A device according to claim 1, characterised in that the resistance path (13,23) is formed by a flat profile of electrically conductive elastomer.

10. A device according to claim 1, characterised in that the resistance path (13,23) is formed as a resistive layer on a supporting profile of flexible insulating material.

11. A device according to claim 1, characterised in that the resistance path is formed by a coil of resistance wire (23) on a supporting profile (25) of flexible insulating material.

12. A device according to claim 1, characterised in that the contact path (14) is formed as a metallic flat profile.

13. A device according to claim 1, characterised in that the contact path (24) is formed by a flat profile of electrically conductive elastomer.

14. A device according to claim 1, characterised in that the tubular insulating cover (12) is formed by a half-round hollow profile.

15. A device according to claim 1, characterised in that the tubular insulating cover (12) contains a screening mesh.


## Revendications

1. Appareil de visée à haute vitesse pour un dispositif directionnel asservi sur un véhicule d'observation ou un véhicule armé, comportant un potentiomètre tactile (10, 10a) servant de générateur d'angle, et disposé de manière annulaire autour de l'emplacement de l'observateur sur le véhicule, caractérisé en ce que le potentiomètre tactile (10, 10a) comporte un chemin résistant souple (13, 23) et un chemin de contact souple (14, 12) qui sont guidés dans une gaine isolante (12) en forme de tube, et à une distance radiale réciproque, le potentiomètre tactile (10, 10a) pouvant s'adapter à différents rayons de courbure et en ce qu'il est prévu sur un profilé d'habillage (4) de l'emplacement de l'observateur et cet emplacement définit la forme annulaire.

2. Dispositif selon la revendication 1, caractérisé en ce que le potentiomètre tactile (10, 10a) est intégré dans le profilé d'habillage (4) du bord (3) du hublot d'observation (2) du véhicule.

3. Appareil selon la revendication 1, caractérisé en ce que le potentiomètre tactile (10, 10a) est relié au profilé d'habillage (4) par une liaison par la forme, par des pattes (8) et des rainures.

4. Appareil selon la revendication 1, caractérisé en ce que le profilé d'habillage (4) comporte de part et d'autre du potentiomètre tactile (10, 10a), de manière parallèle, des bourrelets ayant au moins la même hauteur que la gaine isolante (12).

5. Dispositif selon la revendication 1, caractérisé en ce que le chemin de contact (4, 24) et les deux extrémités du chemin résistant (13, 23) sont reliées chacune à des conducteurs de branchement (11, 20, 21, 22) qui sortent de la gaine isolante (12) au niveau d'une extrémité du potentiomètre (10, 10a).

6. Dispositif selon la revendication 1, caractérisé en ce que le chemin résistant (13, 23) est formé par un fil résistant.

7. Dispositif selon la revendication 6, caractérisé en ce que le fil résistant (13) est guidé de manière mobile longitudinalement dans un tube (15) en un élastomère conducteur d'électricité.

8. Appareil selon la revendication 7, caractérisé en ce que les extrémités du fil résistant (13) sont reliées par des cordons et conducteurs souples (19) à l'intérieur de la gaine isolante (12) avec les conducteurs de branchement (11, 21, 22).

9. Appareil selon la revendication 1, caractérisé en ce que le chemin résistant (13, 23) est formé par un profilé plat en un élastomère conducteur d'électricité.

10. Appareil selon la revendication 1, caractérisé en ce que le chemin résistant (13, 23) est une résistance en couche réalisée sur un profilé de support en un matériau isolant souple.

11. Appareil selon la revendication 1, caractérisé en ce que le chemin résistant est formé par une spire en un fil résistant (23) sur un profilé de support (25) en un matériau isolant souple.

12. Appareil selon la revendication 1, caractérisé en ce que le chemin de contact (14) est en forme de profilé métallique plat.

13. Appareil selon la revendication 1, caractérisé en ce que le chemin de contact (24) est formé d'un profilé plat en un élastomère conducteur d'électricité.

14. Appareil selon la revendication 1, caractérisé en ce que la gaine isolante (12), tubulaire est formée par un profilé creux de section semi-circulaire.

15. Appareil selon la revendication 1, caractérisé en ce que la gaine isolante (12), tubulaire comporte une tresse formant écran.

FIG.1

FIG.2

FIG.4

FIG.3